**Europäisches Patentamt**

**European Patent Office**

**Office européen des brevets**

(19)

(11) Numéro de publication : **0 608 028 A1**

# (12) DEMANDE DE BREVET EUROPEEN

(21) Numéro de dépôt : **94200106.6**

(22) Date de dépôt : **18.01.94**

(51) Int. Cl.⁵ : **C25B 15/08, C25B 9/00**

(30) Priorité : **22.01.93 IT MI930103**

(43) Date de publication de la demande :
**27.07.94 Bulletin 94/30**

(84) Etats contractants désignés :
**AT BE CH DE DK ES FR GB IT LI NL PT SE**

(71) Demandeur : **SOLVAY (Société Anonyme)**
**Rue du Prince Albert, 33**
**B-1050 Bruxelles (BE)**

(72) Inventeur : **Botte, Luc**
**Loc. La Ragnaia, 50/B**
**I-57012 Castiglioncello/Livorno (IT)**

(74) Mandataire : **Anthoine, Paul et al**
**SOLVAY S.A.**
**Département de la Propiété Industrielle,**
**Rue de Ransbeek, 310**
**B-1120 Bruxelles (BE)**

(54) **Electrolyseur pour la production d'un gaz.**

(57) Electrolyseur pour la production d'un gaz comprenant une batterie (1) de cellules d'électrolyse à membranes, dans lesquelles l'écart entre l'anode (8) et la cathode (28) est supérieur à l'épaisseur de la membrane (4), une chambre de dégazage d'électrolyte (15), en communication avec la partie supérieure des chambres anodiques (ou cathodiques) (3), et une conduite de recyclage d'électrolyte (20, 21) reliant la chambre de dégazage (15) à des distributeurs d'électrolyte (10, 11, 12, 13) qui sont en communication avec les chambres anodiques (cathodiques) (3) des cellules, la conduite de recyclage (20, 21) présentant un coefficient de perte de charge qui est égal, au maximum, au coefficient global des pertes de charge des chambres anodiques (cathodiques) (3), des distributeurs (10, 11, 12, 13) et de la chambre de dégazage (15).

FIG.1

EP 0 608 028 A1

L'invention concerne les électrolyseurs pour la production électrolytique d'un gaz.

Elle concerne plus particulièrement un électrolyseur comprenant une batterie de cellules d'électrolyse à membranes et à électrodes verticales, une chambre de dégazage d'électrolyte en communication avec les cellules et une conduite de recyclage d'électrolyte de la chambre de dégazage vers les cellules.

Un électrolyseur du type défini ci-dessus est décrit dans la demande de brevet EP-A-0412600 (SOLVAY). Dans cet électrolyseur connu, la chambre anodique de chaque cellule de la batterie est en communication, à sa partie inférieure, avec un distributeur d'électrolyte et à sa partie supérieure, avec la chambre de dégazage. Les distributeurs d'électrolyte de l'ensemble des chambres anodiques des cellules de la batterie sont connectés en parallèle à la conduite de recyclage, laquelle débouche par ailleurs dans la chambre de dégazage. Pendant le fonctionnement de cet électrolyseur connu, une solution aqueuse de chlorure de sodium est électrolysée dans la chambre anodique de chaque cellule de la batterie, de sorte que du chlore est généré sur l'anode. La solution aqueuse de chlorure de sodium, chargée de chlore, monte dans la chambre anodique et passe de celle-ci dans la chambre de dégazage où il s'opère une séparation du chlore et de la solution aqueuse qui retourne dans les chambres anodiques de la batterie de cellules via la conduite de recyclage et les distributeurs d'électrolyte.

Un fonctionnement optimum de cet électrolyseur connu impose un respect strict de conditions opératoires définies. La pression dans les chambres d'électrolyse de la batterie de cellules constitue un paramètre particulièrement important, car une pression inadéquate, même momentanée, dans une chambre anodique ou dans une chambre cathodique peut être à l'origine d'une dégradation mécanique irréversible de la membrane. La pression dans les chambres d'électrolyse est elle-même influencée par d'autres paramètres, notamment par le débit d'admission de l'électrolyte dans la batterie de cellules et par les caractéristiques géométriques des chambres d'électrolyse et de la conduite de recyclage. Il est difficile de maîtriser avec précision les caractéristiques géométriques des chambres d'électrolyse (telles que la planéité des électrodes et l'épaisseur des joints dans les batteries de cellules du type filtre-presse) et il en résulte invariablement des disparités dans les dimensions ou le profil des différentes cellules de la batterie. Le débit d'électrolyte recyclé dans la batterie de cellules constitue un autre paramètre difficile à maîtriser et susceptible d'influencer la bonne marche de l'électrolyseur.

On a maintenant trouvé que par un choix approprié de certaines caractéristiques constructives de l'électrolyseur, on parvenait à réduire de manière sensible l'incidence, sur la marche de l'électrolyseur, des disparités géométriques des cellules de la batterie, d'une part, et des variations du débit de recyclage d'électrolyte, d'autre part.

L'invention concerne dès lors un électrolyseur pour la production d'un gaz comprenant :

- une batterie de cellules d'électrolyse qui comprennent chacune une chambre anodique contenant une anode sensiblement verticale, une chambre cathodique contenant une cathode sensiblement verticale, disposée vis-à-vis de l'anode, une membrane à perméabilité sélective interposée entre l'anode et la cathode et isolant la chambre anodique de la chambre cathodique, et un distributeur d'électrolyte en communication avec la chambre anodique (cathodique) à la partie inférieure de celle-ci,
- une chambre de dégazage d'électrolyte, en communication avec la partie supérieure de la chambre anodique (cathodique) de chaque cellule, et
- une conduite de recyclage d'électrolyte reliant la chambre de dégazage aux distributeurs respectifs des chambres anodiques (cathodiques) de la batterie de cellules,

l'électrolyseur se caractérisant en ce que l'anode et la cathode présentent entre elles un écart supérieur à l'épaisseur de la membrane, et en ce que la conduite de recyclage présente un coefficient de perte de charge qui est au maximum égal au coefficient global des pertes de charge des chambres anodiques (cathodiques), des distributeurs et de la chambre de dégazage.

Dans la définition de l'électrolyseur selon l'invention, les expressions "anode sensiblement verticale" et "cathode sensiblement verticale" désignent indifféremment des anodes et des cathodes qui sont rigoureusement verticales ou des anodes et des cathodes qui occupent une position inclinée par rapport à la verticale, l'inclinaison ne dépassant toutefois généralement pas un angle de 45 degrés (de préférence 15 degrés) par rapport à la verticale.

Par ailleurs, on entend désigner par partie inférieure et partie supérieure d'une chambre anodique (cathodique) les zones de celle-ci qui sont respectivement situées au-dessous et au-dessus du milieu de sa hauteur. En pratique, la partie inférieure est le tiers inférieur de la chambre et la partie supérieure en est le tiers supérieur.

La membrane à perméabilité sélective est une membrane mince, non poreuse, comprenant une matière échangeuse d'ions. Le choix du matériau constituant la membrane et de la matière échangeuse d'ions va dépendre de la nature des électrolytes soumis à l'électrolyse et des produits que l'on cherche à obtenir. En règle générale, le matériau de la membrane est choisi parmi ceux qui sont capables de résister aux conditions thermiques et chimiques régnant normalement dans les cellules de l'électrolyseur pendant l'électrolyse, la matière échangeuse d'ions étant choisie parmi les matières échangeuses d'anions ou les matières échangeuses de cations, en fonction des opérations d'électrolyse auxquelles l'électrolyseur est destiné. Par exemple, dans le cas d'un électrolyseur destiné à l'électrolyse de solutions aqueuses de chlorure de sodium pour la production de chlore, d'hydrogène et de solutions aqueuses d'hydroxyde de sodium, des membranes qui conviennent bien sont des membranes cationiques en polymère fluoré, de préférence perfluoré, contenant des groupements fonctionnels cationiques dérivés d'acides sulfoniques, d'acides carboxyliques ou d'acides phosphoniques ou des mélanges de tels groupements fonctionnels. Des exemples de membranes de ce type sont celles décrites dans les brevets GB-A-1497748 (ASAHI KASEI KOGYO K.K.), US-A-4126588 (ASAHI GLASS COMPANY LTD) et GB-A-1402920 (DIAMOND SHAMROCK CORP.). Des membranes particulièrement adaptées à cette application de l'électrolyseur selon l'invention sont celles connues sous les noms "NAFION" (DU PONT DE NEMOURS & Co) et "FLEMION" (ASAHI GLASS COMPANY LTD).

La batterie de cellules d'électrolyse comprend nécessairement au moins deux cellules d'électrolyse tel que définies plus haut. En général, elle comprend un nombre de cellules d'électrolyse supérieur à deux, de préférence au moins égal à 4. En principe, l'invention n'impose pas de limite supérieure au nombre de cellules de la batterie. En pratique ce nombre est toutefois limité, par des considérations d'encombrement au sol, à des valeurs qui excèdent rarement 50, plus généralement 25. A titre d'exemple, on peut citer des batteries de 5 à 20 cellules, les batteries de 8 à 12 cellules convenant généralement bien. La batterie de cellules d'électrolyse peut avantageusement être formée d'un empilage de cadres à la manière d'un filtre-presse, comme décrit dans la demande de brevet EP-A-0412600 précitée.

Le distributeur d'électrolyte a pour fonction, pendant le fonctionnement de l'électrolyseur, d'assurer l'introduction d'un électrolyte dans la chambre d'électrolyse (anodique ou cathodique) avec laquelle il se trouve en communication, à partir d'une source d'électrolyte. En générale, il comprend une ou plusieurs tubulures qui relient la chambre d'électrolyse à un conduit d'admission d'électrolyte.

Dans l'électrolyseur selon l'invention, ce peut être indifféremment toutes les chambres anodiques ou toutes les chambres cathodiques qui sont reliées à la chambre de dégazage et à la conduite de recyclage. Ces chambres anodiques (ou cathodiques) sont reliées en dérivation à la chambre de dégazage et à la conduite de recyclage.

Pendant le fonctionnement de l'électrolyseur selon l'invention, l'électrolyte présent dans chaque chambre anodique (cathodique) est électrolysé, un gaz est généré sur l'anode (la cathode) et on recueille, à la partie supérieure de la chambre anodique (cathodique) une émulsion qui passe dans la chambre de dégazage. La chambre de dégazage est un dispositif bien connu en technique, servant à briser l'émulsion pour en séparer le gaz et un électrolyte dilué.

La conduite de recyclage sert à renvoyer l'électrolyte dilué précité ou une partie de celui-ci dans les chambres d'électrolyse d'où il provient, via les distributeurs de ces chambres d'électrolyse. La fraction non recyclée de l'électrolyte dilué de la chambre de dégazage est évacuée de l'électrolyseur. La conduite de recyclage peut comprendre une vanne d'ouverture réglable, destinée à régler l'importance de la fraction d'électrolyte dilué, qui est recyclée dans les chambres d'électrolyse. Par la suite, l'expression "conduite de recyclage" désignera, dans son ensemble, la conduite proprement dite et, le cas échéant, la vanne précitée qui y est incorporée.

Selon l'invention, l'anode et la cathode de chaque cellule d'électrolyse sont maintenues écartées l'une de l'autre, de manière à réaliser entre elles un écart supérieur à l'épaisseur de la membrane, étant entendu que l'épaisseur de la membrane est la dimension de celle-ci, transversalement à l'anode et à la cathode. Dans l'électrolyseur selon l'invention, il existe dès lors un espace libre entre l'anode et la cathode, la largeur de cet espace libre étant la différence entre l'écart précité et l'épaisseur de la membrane. Il convient d'éviter un écart excessif entre l'anode et la cathode, qui aurait pour effet d'augmenter exagérément la tension d'électrolyse pendant l'exploitation de l'électrolyseur. L'écart optimum entre l'anode et la cathode va dès lors résulter d'un compromis et dépendre de divers facteurs, notamment de la géométrie de l'anode et de la cathode, des dimensions de celles-ci, de l'épaisseur de la membrane et de la densité du courant d'électrolyse. Elle doit dès lors être déterminée dans chaque cas particulier par une série d'essais de routine. En pratique, il est souhaitable que la largeur de l'espace libre entre l'anode et la cathode soit d'au moins 1 mm (de préférence 2 mm), sans excéder 5 mm (de préférence 4 mm). Les largeurs de 2,5 à 3,5 mm se sont révélées spécialement avantageuses.

Selon une autre caractéristique de l'électrolyseur selon l'invention, la conduite de recyclage présente un coefficient de perte de charge qui est au maximum égal au coefficient global des pertes de charge des chambres anodiques (cathodiques), des distributeurs et de la chambre de dégazage.

Par définition, le coefficient de perte de charge K d'un circuit hydraulique est un nombre défini par la relation :

$$\Delta p = K.\frac{v^2}{2\,g} \cdot \delta$$

où

v    désigne la vitesse moyenne d'un liquide dans le circuit hydraulique,

δ    désigne la masse volumique du liquide,

Δp   désigne la chute de pression subie par le liquide dans le circuit hydraulique,

g    désigne l'accélération de la pesenteur,

K    désigne lé coefficient de perte de charge.

On entend désigner, par coefficient global des pertes de charge des chambres anodiques (cathodiques), des distributeurs et de la chambre de dégazage, le coefficient de perte de charge du circuit hydraulique comprenant les chambres anodiques (cathodiques), les distributeurs, la chambre de dégazage et les éléments de jonction des chambres anodiques aux distributeurs et à la chambre de dégazage.

Pendant le fonctionnement normal de l'électrolyseur selon l'invention, une partie au moins de l'électrolyte sortant de la chambre de dégazage circule en circuit fermé successivement dans la conduite de recyclage, les distributeurs respectifs des chambres anodiques (cathodiques), lesdites chambres anodiques (cathodiques) et la chambre de recyclage. La caractéristique susdite de l'électrolyseur selon l'invention a pour résultat que la perte de charge subie par l'électrolyte dans la conduite de recyclage n'excède pas la perte de charge qu'il subit dans la partie restante du circuit fermé susdit.

Dans l'électrolyseur selon l'invention, on préfère que le coefficient de perte de charge de la conduite de recyclage soit inférieur au coefficient global précité des pertes de charge. En pratique, il s'est révélé avantageux que le rapport entre, d'une part, le coefficient de perte de charge de la conduite de recyclage et, d'autre part, la somme de ce coefficient et du coefficient global précité soit inférieur à 0,50, de préférence à 0,35. Il s'est révélé souhaitable que ce rapport soit supérieur à 0,020, de préférence à 0,050. Les valeurs de 0,080 à 0,25 sont spécialement avantageuses.

Dans l'électrolyseur selon l'invention, tout moyen approprié peut être utilisé pour réaliser le rapport précité entre les coefficients de perte de charge. Un moyen particulièrement approprié consiste à engendrer une perte de charge définie dans le distributeur des chambres anodiques (cathodiques) de la batterie de cellules d'électrolyse. A cet effet, dans une forme de réalisation avantageuse de l'électrolyseur selon l'invention, le distributeur associé à chaque chambre anodique (cathodique) comprend une tubulure de jonction de la conduite de recyclage à ladite chambre anodique (cathodique), ladite tubulure présentant un étranglement calibré.

Dans une variante préférée de cette forme de réalisation de l'invention, l'étranglement calibré comprend un diaphragme d'ouverture calibrée, inséré dans la tubulure.

Une particularité avantageuse de l'électrolyseur selon l'invention réside dans la grande régularité des débits et des pressions des fluides dans la batterie des cellules d'électrolyse. En particulier, dans l'électrolyseur selon l'invention, les débits et les pressions des fluides dans les cellules d'électrolyse sont pratiquement insensibles aux disparités géométriques habituelles des cellules et aux variations des conditions d'électrolyse survenant pendant le fonctionnant normal de l'électrolyseur. L'électrolyseur selon l'invention présente ainsi l'avantage d'une grande régularité des pressions et des débits dans les cellules, ce qui est de nature à réduire considérablement les sollicitations mécaniques de la membrane.

Dans une forme de réalisation préférée de l'électrolyseur selon l'invention, la somme des coefficients individuels de perte de charge des distributeurs est supérieur à la moitié du coefficient global précité des pertes de charge. Toutes autres choses égales, cette forme de réalisation de l'électrolyseur selon l'invention permet une répartition réglée optimum du débit d'électrolyte entre les cellules d'électrolyse individuelles de l'électrolyseur. Dans cette forme de réalisation de l'électrolyseur selon l'invention, l'importance des coefficients individuels de perte de charge des distributeurs vis-à-vis du coefficient global précité des pertes de charge va dépendre du nombre de cellules d'électrolyse individuels de l'électrolyseur. En pratique, il est souhaitable que la somme susdite de ces coefficients individuels n'excède pas 10 fois, de préférence 5 fois la moitié du coefficient global précité des pertes de charge, les valeurs de 1,2 à 2 pour le rapport entre ladite somme et ledit coefficient global convenant généralement bien.

Dans l'électrolyseur selon l'invention, les coefficients individuels de perte de charge des distributeurs sont de préférence sensiblement égaux.

Des particularités et détails de l'invention vont ressortir de la description des dessins annexés.

La figure 1 montre schématiquement, en section transversale verticale, une forme de réalisation particulière de l'électrolyseur selon l'invention.

La figure 2 est, à grande échelle, une coupe selon le plan II-II de la figure 1.

La figure 3 est un diagramme servant à illustrer deux exemples de comparaison.

Dans ces figures, des mêmes notations de référence désignent des éléments identiques.

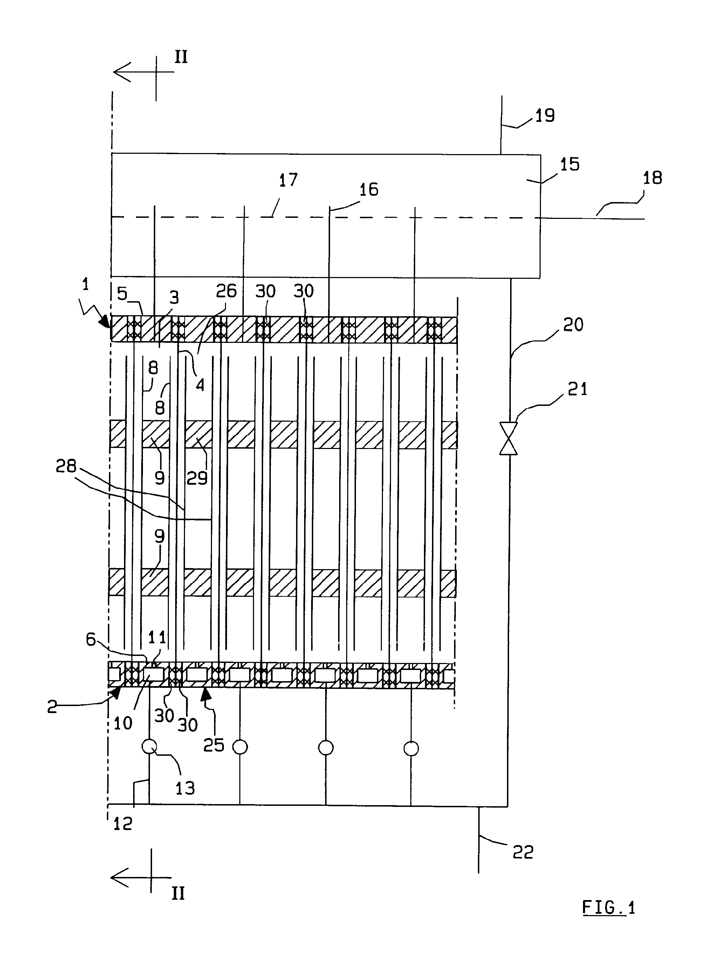

A la figure 1, la notation de référence 1 désigne une batterie de cellules d'électrolyse de l'électrolyseur. La batterie de cellules 1 est formée d'un empilage de cadres rectangulaires verticaux 2 et 25 qui délimitent alternativement des chambres d'électrolyse anodiques 3 et des chambres d'électrolyse cathodiques 26. Des membranes 4, sélectivement perméables aux cations, séparent les chambres anodiques 3 des chambres cathodiques 26. L'étanchéité de l'assemblage est assurée au moyen de joints d'étanchéité 30, comprimés élastiquement entre les membranes 4 et les cadres 2 et 25.

Les cadres 2 sont formés chacun d'un longeron horizontal supérieur 5, d'un longeron horizontal inférieur 6 et de deux montant verticaux 7 et 27.

Chaque chambre anodique 3 contient une anode formée d'une paire de plaques métalliques verticales 8 fixées de part et d'autre de barreaux métalliques horizontaux 9 traversant de manière étanche les montants 7 des cadres 2 pour être raccordés en dérivation à la borne positive d'une source de courant continu, non représentée.

De manière similaire, chaque chambre cathodique 26 contient une cathode formée d'une paire de plaques métalliques verticales 28 fixées de part et d'autre de barreaux métalliques horizontaux 29 traversant les montants (non représentés) des cadres 25 pour être raccordés en dérivation à la borne négative de la source de courant.

La figure 1 montre que, conformément à l'invention, l'écart entre chaque anode 8 et la cathode contiguë 28 est supérieur à l'épaisseur de la membrane 4 disposée entre elles. En pratique, la membrane ayant une épaisseur sensiblement uniforme de 200 à 300 µm environ, on peut par exemple réaliser un écart d'environ 3 mm entre l'anode 8 et la cathode 28 contiguë. Cet écart peut être aisément obtenu par un choix approprié de l'épaisseur des joints d'étanchéité 30.

Chaque chambre anodique 3 est par ailleurs en communication avec un distributeur d'électrolyte. Celui-ci comprend une chambre interne 10 du longeron inférieur 6, une rangée d'ouvertures 11 mettant la chambre interne 10 en communication avec la chambre anodique 3 et une tubulure 12 qui traverse le longeron 6 et débouche dans la chambre interne 10. La chambre interne 10 s'étend approximativement sur toute la longueur du longeron 6.

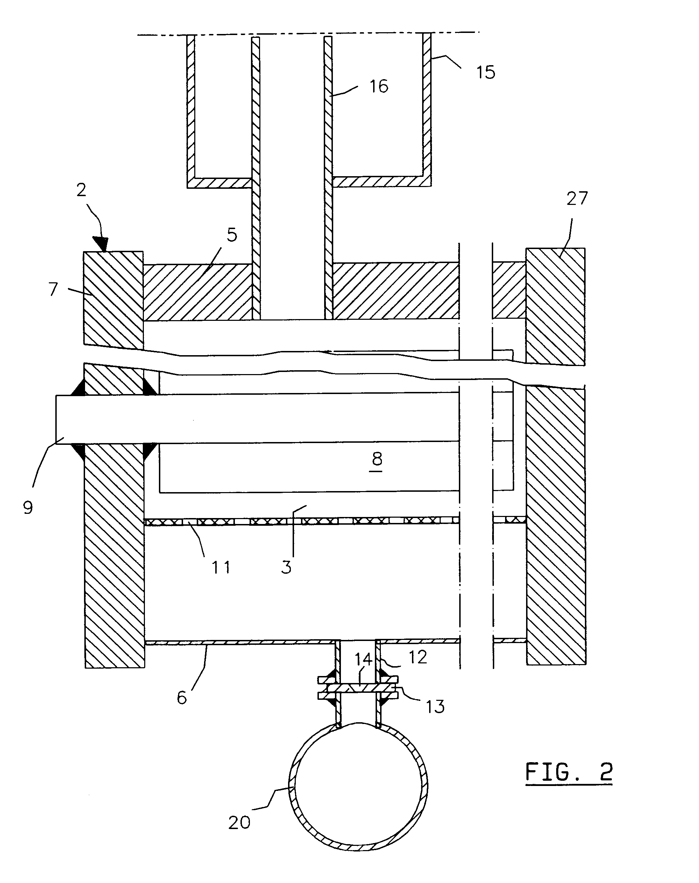

Conformément à l'invention, les tubulures 12 présentent un étranglement calibré. Celui-ci consiste en un diaphragme 13 d'ouverture calibrée 14 (figure 2), qui est inséré entre deux tronçons de la tubulure 12.

L'électrolyseur représenté aux figures 1 et 2 comprend en outre une chambre de dégazage 15 qui est située au-dessus de la batterie de cellules 1 et qui est reliée aux chambres anodiques 3 par des buses 16 traversant le longeron supérieur 5 des cadres 2. Les buses 16 débouchent dans la chambre de dégazage au-dessus du niveau 17 d'une conduite de trop-plein 18. La chambre de dégazage 15 se trouve en outre en communication, au-dessus du niveau 17, avec une conduite d'évacuation de gaz 19.

Une conduite de recyclage 20 relie la chambre de dégazage 15 aux tubulures 12 des chambres anodiques 3. A cet effet, les tubulures respectives 12 des chambres anodiques sont couplées en parallèle à la conduite de recyclage 20 et celle-ci débouche dans la chambre de dégazage 15 sous le niveau 17.

Une conduite générale 22 d'admission d'électrolyte débouche dans la conduite 20. Elle sert à alimenter les chambres anodiques 3 avec un électrolyte à électrolyser.

La description qui précède concernant la liaison des chambres anodiques 3 à la chambre de dégazage 15 et à la conduite de recyclage 20 via les chambres 10 et les tubulures calibrées 12 peut être répétée pour les chambres cathodiques 26, une autre chambre de dégazage (reliée en dérivation aux chambres cathodiques) et une autre conduite de recyclage (joignant cette autre chambre de dégazage aux chambres cathodiques 26).

L'électrolyseur représenté aux figures 1 et 2 est spécialement adapté à la production électrolytique de chlore et de solutions aqueuses d'hydroxyde de sodium. A cet effet, par l'intermédiaire de la conduite d'admission 22, on introduit une solution aqueuse de chlorure de sodium dans les chambres anodiques 3, via les tubulures 12 et les chambres internes 10 des longerons 6. Simultanément, on introduit de l'eau ou une solution aqueuse diluée d'hydroxyde de sodium dans les chambres cathodiques 26. Les anodes 8 et les cathodes 28 étant reliées à la source de courant continu, les solutions aqueuses précitées sont électrolysées au contact des anodes 8 et des cathodes 28. Dans les chambres anodiques 3, il se forme une émulsion de chlore dans une solution aqueuse de chlorure de sodium. Cette émulsion monte dans les chambres anodiques 3 et passe dans la chambre de dégazage 15, via les buses 16. Dans la chambre de dégazage 15 l'émulsion est brisée, le chlore libéré est évacué par la conduite 19 et la solution aqueuse de chlorure de sodium séparée du chlore retourne dans les chambres anodiques 3 via la conduite de recyclage 20, les tubulures 12 et les chambres internes 10 des longerons 6.

Conformément à l'invention, l'ouverture 14 des diaphragmes 13 est choisie de manière que, pendant le fonctionnement normal de l'électrolyseur, la perte de charge subie par la solution aqueuse de chlorure de sodium dans la conduite de recyclage 20 soit inférieure à la perte de charge qu'elle subit globalement dans l'ensemble des tubulures 12, des diaphragmes 13, des chambres 10, des ouvertures 11, des chambres anodiques 3, des buses 16 et de la chambre de dégazage 15.

Les deux essais décrits dans les exemples suivants vont illustrer le progrès apporté par l'invention.

Exemple 1 (conforme à l'invention)

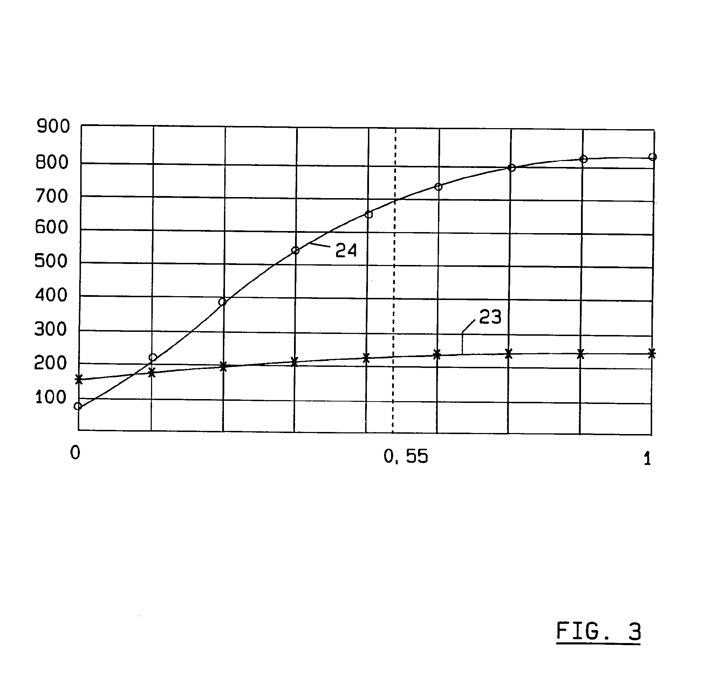

On a utilisé un électrolyseur analogue à celui décrit plus haut, comprenant une batterie de 11 cellules d'électrolyse. Les cellules utilisées présentaient un écart d'environ 3 mm entre l'anode et la cathode. Pour la réalisation de l'essai, on a monté une vanne 21 dans la conduite de recyclage 20 et on a mesuré, pour différentes positions d'ouverture de la vanne 21, le rapport R entre, d'une part, le coefficient de perte de charge dans la conduite de recyclage 20 et dans la vanne 21 et, d'autre part, la somme de ce coefficient et du coefficient global des pertes de charge dans l'ensemble des tubulures 12, des diaphragmes 13, des chambres 10, des ouvertures 11, des chambres anodiques 3 et de la chambre de dégazage 15. Dans l'exemple, l'ouverture 24 des diaphragmes 13 a été sélectionnée de manière que le rapport R précité soit sensiblement égal à 0,11 dans le cas où la vanne 21 se trouve en position d'ouverture maximum, et à 0,35 dans le cas où la vanne 21 occupe une position pour laquelle la section de passage de l'électrolyte soit sensiblement égale à 55 % de la section de passage maximum (vanne 21 en position d'ouverture maximum). On a procédé à l'électrolyse d'une solution aqueuse de chlorure de sodium dans la cellule et on mesuré la pression dans la partie supérieure des chambres anodiques 3, pour différentes positions de la vanne 21. Les résultats de l'essai sont représentés par la courbe 23 du diagramme de la figure 3, dans lequel l'échelle des abscisses représente la position d'ouverture de la vanne 21 [la position 0 correspondant à la fermeture de la vanne, la position 1 correspondant à une ouverture maximum (rapport R = 0,11) et les positions intermédiaires correspondant à des ouvertures partielles (la position 0,55 correspondant au rapport R = 0,35) et l'échelle des ordonnées représente la pression (exprimée en mm de colonne d'eau) dans la partie supérieure des chambres d'électrolyse, immédiatement sous les longerons supérieurs 5.

Exemple 2 (de référence)

L'électrolyseur de l'exemple 1 a été modifié en ce sens que l'on a supprimé les diaphragmes 13. Dans l'électrolyseur ainsi modifié, le rapport R précité des coefficients de perte de charge a varié de 0,32 (vanne 21 en position d'ouverture 1) à 0,7 (vanne 21 en position d'ouverture 0,55). On a répété les conditions d'électrolyse de l'exemple 1.

Les résultats de l'essai sont représentés par la courbe 24 du diagramme de la figure 3.

Une comparaison des courbes 23 et 24 du diagramme de la figure 3 fait immédiatement apparaître que, dans le cas de l'exemple 1 (courbe 23), la pression dans la chambre anodique a été très peu influencée par la position de la vanne 21, contrairement à l'exemple de référence 2 (courbe 24). En d'autres termes, dans l'électrolyseur de l'exemple 1 (conforme à l'invention), la pression dans les chambres anodiques a été nettement moins sensible aux variations des conditions de marche de l'électrolyseur, ce qui constitue un avantage et une sécurité contre le risque d'incidents pendant l'exploitation industrielle de l'électrolyseur. Dans le cas de l'exemple 2, l'ouverture de la vanne 21 a dû être fortement limitée (section de passage inférieure à 20 % de la section de passage maximum), pour réaliser, dans les chambres anodiques 3, une pression analogue à celle obtenue à l'exemple 1. Une très faible ouverture de la vanne 21 a pour résultat de réduire fortement le débit de l'électrolyte dans la conduite de recyclage 20, ce qui est préjudiciable à une distribution homogène de l'électrolyte dans les chambres anodiques 3 de l'électrolyseur. Une différence essentielle entre l'électrolyseur de l'exemple 1 (conforme à l'invention) et l'électrolyseur de l'exemple 2 (de référence), réside dans le moyen utilisé pour règler le débit d'électrolyte dans les chambres d'électrolyse 3. Dans l'électrolyseur (selon l'invention) de l'exemple 1, ce moyen est constitué des diaphragmes 13 qui régulent individuellement le débit de l'électrolyte à l'entrée de chaque cellule 3 de l'électrolyseur, ce qui est favorable à une répartition réglée de l'électrolyte entre les cellules 3. Par contre, dans l'électrolyseur de l'exemple 2, ledit moyen est constitué de la vanne 21 qui régule globalement le débit de l'électrolyte, en amont de la batterie de cellules 1, ce qui ne permet pas un réglage de la répartition de l'électrolyte entre les cellules individuelles 3 de la batterie 1.

## Revendications

1 - Electrolyseur pour la production d'un gaz comprenant :
- une batterie (1) de cellules d'électrolyse qui comprennent chacune une chambre anodique (3) contenant une anode sensiblement verticale (8), une chambre cathodique (26) contenant une cathode sensiblement verticale (28), disposée vis-à-vis de l'anode (8), une membrane à perméabilité sélective (4) interposée entre l'anode (8) et la cathode (28) et isolant la chambre anodique (3) de la chambre cathodique (26), et un distributeur d'électrolyte (10, 11, 12, 13) en communication avec la chambre anodique (cathodique) à la partie inférieure de celle-ci,
- une chambre de dégazage d'électrolyte (15), en communication avec la partie supérieure de la chambre anodique (cathodique) de chaque cellule,
- une conduite de recyclage d'électrolyte (20, 21) reliant la chambre de dégazage (15) aux distributeurs respectifs (10, 11, 12, 13) des chambres anodiques (cathodiques) de la batterie de cellules,

caractérisé en ce que l'anode (8) et la cathode (28) présentent entre elles un écart supérieur à l'épaisseur de la membrane (4), et en ce que la conduite de recyclage (20, 21) présente un coefficient de perte de charge qui est au maximum égal au coefficient global des pertes de charge des chambres anodiques (cathodiques) (3), des distributeurs (10, 11, 12, 13) et de la chambre de dégazage (15).

**2** - Electrolyseur selon la revendication 1, caractérisé en ce que l'écart précité entre l'anode (8) et la cathode (28) est d'au moins 1 mm en plus de l'épaisseur de la membrane (4).

**3** - Electrolyseur selon la revendication 2, caractérisé en ce que l'écart précité entre l'anode (8) et la cathode (28) est de 2,5 à 3,5 mm en plus de l'épaisseur de la membrane (4).

**4** - Electrolyseur selon l'une quelconque des revendications 1 à 3, caractérisé en ce que le coefficient de perte de charge de la conduite de recyclage (20, 21) est inférieur au coefficient global précité des pertes de charge.

**5** - Electrolyseur selon la revendication 4, caractérisé en ce que le rapport entre, d'une part, le coefficient de perte de charge de la conduite de recyclage (20, 21) et, d'autre part, la somme de ce coefficient et du coefficient global précité est inférieur à 0,35.

**6** - Electrolyseur selon la revendication 5, caractérisé en ce que le rapport précité est de 0,080 à 0,25.

**7** - Electrolyseur selon l'une quelconque des revendications 1 à 6, caractérisé en ce que la somme des coefficients individuels de perte de charge des distributeurs (10, 11, 12, 13) est supérieur à la moitié du coefficient global précité des pertes de charge.

**8** - Electrolyseur selon la revendication 7, caractérisé en ce que la somme des coefficients individuels de perte de charge des distributeurs (10, 11, 12, 13) est de 1,2 à 2 fois la moitié du coefficient global précité des pertes de charge.

**9** - Electrolyseur selon l'une quelconque des revendications 1 à 8, caractérisé en ce que les distributeurs (10, 11, 12, 13) présentent des coefficients individuels de perte de charge sensiblement égaux.

**10** - Electrolyseur selon l'une quelconque des revendications 1 à 9, caractérisé en ce que le distributeur comprend une tubulure de jonction (12) de la conduite de recyclage (20) à la chambre anodique (cathodique) (3), ladite tubulure (12) présentant un étranglement calibré.

**11** - Electrolyseur selon la revendication 10, caractérisé en ce que l'étranglement calibré est un diaphragme (13) d'ouverture calibrée (14), inséré dans la tubulure (12).

**12** - Electrolyseur selon l'une quelconque des revendications 1 à 11, caractérisé en ce que la chambre de dégazage (15) est disposée au dessus de la batterie (1) et comprend au moins une buse (16) de jonction à la chambre anodique (cathodique) (3) de chaque cellule d'électrolyse.

**13** - Electrolyseur selon l'une quelconque des revendications 1 à 12, caractérisé en ce que la membrane à perméabilité selective (4) est une membrane perméable sélectivement aux cations.

**14** - Electrolyseur selon la revendication 13, pour la production de chlore, d'hydrogène et d'hydroxyde de sodium par électrolyse d'une solution aqueuse de

chlorure de sodium.

FIG.1

FIG. 2

FIG. 3

**Office européen des brevets**

# RAPPORT DE RECHERCHE EUROPEENNE

Numero de la demande

**EP 94 20 0106**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | EP-A-0 053 808 (OLIN CORPORATION) 16 Juin 1982<br>* page 2, ligne 25 - ligne 34 *<br>* page 5, ligne 13 - ligne 17 *<br>* page 11, ligne 29 - page 12, ligne 12 *<br>* figures 1-3 * | 1 | C25B15/08<br>C25B9/00 |
| A | EP-A-0 020 887 (HOECHST AKTIENGESELLSCHAFT) 7 Janvier 1981<br>* page 6, ligne 1 - ligne 7 *<br>* figure 1 * | 1 | |
| A | US-A-4 505 789 (J.M. FORD) 19 Mars 1985<br>* colonne 7, ligne 9 - ligne 25 *<br>* figures 1,4 * | 1 | |
| A | US-A-4 149 952 (KIMIHIKO SATO) 17 Avril 1979 | | |

**DOMAINES TECHNIQUES RECHERCHES (Int.Cl.5)**

C25B

Le présent rapport a été établi pour toutes les revendications

| Lieu de la recherche | Date d'achèvement de la recherche | Examinateur |
|---|---|---|
| LA HAYE | 4 Mai 1994 | Groseiller, P |